(19) Europäisches Patentamt
European Patent Office
Office européen des brevets

(11) **EP 3 152 631 B1**

(12) **EUROPEAN PATENT SPECIFICATION**

(45) Date of publication and mention of the grant of the patent:
**05.08.2020 Bulletin 2020/32**

(51) Int Cl.:
*F24D 19/10* *(2006.01)*      *F24F 11/83* *(2018.01)*
*G05D 7/06* *(2006.01)*

(21) Application number: **15802801.9**

(22) Date of filing: **04.06.2015**

(86) International application number:
**PCT/US2015/034205**

(87) International publication number:
**WO 2015/187955 (10.12.2015 Gazette 2015/49)**

(54) **SYSTEM AND FLOW ADAPTIVE SENSORLESS PUMPING CONTROL APPARATUS FOR ENERGY SAVING PUMPING APPLICATIONS**

SYSTEM UND STRÖMUNGSADAPTIVE SENSORLOSE PUMPENSTEUERUNGSVORRICHTUNG FÜR ENERGIESPARENDE PUMPENANWENDUNGEN

SYSTEME ET APPAREIL DE COMMANDE DE POMPAGE ADAPTATIF DE DEBIT SANS CAPTEUR POUR DES APPLICATIONS DE POMPAGE A ECONOMIE D'ENERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.06.2014 US 201462007474 P**

(43) Date of publication of application:
**12.04.2017 Bulletin 2017/15**

(73) Proprietor: **Fluid Handling LLC.**
**Morton Grove, IL 60053 (US)**

(72) Inventors:
• **CHENG, Andrew A.**
**Wilmette, IL 60091 (US)**
• **GU, James J.**
**Buffalo Grove, IL 60089 (US)**
• **SCOTT, Graham A.**
**New Port Richey, FL 34654 (US)**

(74) Representative: **DREISS Patentanwälte PartG mbB**
**Friedrichstraße 6**
**70174 Stuttgart (DE)**

(56) References cited:
| WO-A1-2014/089693 | WO-A2-03/052324 |
|---|---|
| US-A1- 2012 173 027 | US-A1- 2012 173 027 |
| US-A1- 2012 251 340 | US-A1- 2012 251 340 |
| US-A1- 2014 048 244 | US-A1- 2014 048 244 |
| US-B2- 7 284 710 | US-B2- 7 284 710 |

**Description**

It is known from US 2012/173027 to have an apparatus comprising a signalling processor or processing module configured at least to receive signalling containing information about flow rates and determine desired pump speeds using varying equivalent system characteristic, a varying equivalent system characteristic curve aka, an adaptive control curve.

BACKGROUND OF THE INVENTION

1. Field of the Invention

The present invention relates to a technique for controlling the operation of a pump and pumping system; and more particularly, the present invention relates to a method and apparatus for controlling and/or monitoring a pump, e.g., including for domestic and commercial heating or cooling water systems.

2. Brief Description of Related Art

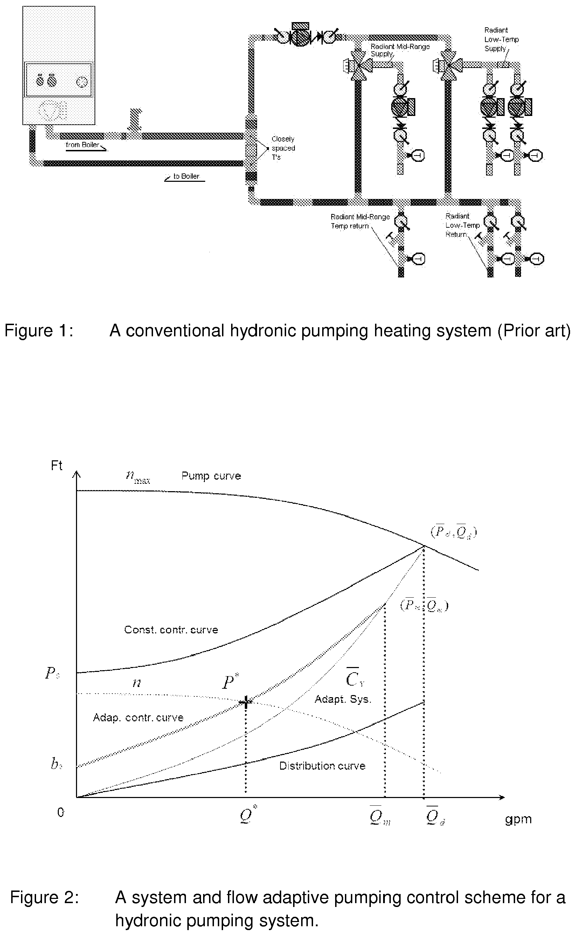

Figure 1 shows schematically a conventional constant pumping hydronic heating system, where hot water supplied from a boiler by a primary pump is transferred to heating zones by a secondary pump and circulated through zones by circulators respectively. A three way valve controlled by a temperature sensor detours incoming water partially into heating zones to maintain the flow rate requested for the temperature setup at zones and bypasses the rest of the incoming water into bypass pipelines, respectively. Following this configuration, there is significant energy waste in the system, including the energy loss due to flow dynamic friction through the bypass pipelines and valves, as well as the water thermal energy loss in bypass lines.

Recently, variable speed pump controls with energy saving control means or techniques, such as a linear curve control or a quadratic curve control, were disclosed for hydronic pumping control applications. However, the amount of energy that might be saved by these energy saving control means or techniques is mostly dependent on the control parameters set up, for instance, system design values on pressure and flow rate which are unknown in general to an operator due to the complexity of a hydronic system in service. In addition, the flow rate in the system may vary from time to time depending on the temperature settings and weather conditions outside as well.

In view of this, there is a need in the industry for an energy saving control means or technique, e.g., which is not only adaptive to the system curve, but to the flow rate associated with as well, so that pumping energy may be saved optimally.

SUMMARY OF THE INVENTION

In summary, the present invention provides a new and unique system and flow adaptive control means or technique for a hydronic pumping heating or cooling system is disclosed herein. In summary, a control curve in the system and flow adaptive control means or technique may be setup adaptively with respect to system characteristics curve as well as a moving maximum flow rate. In operation, the pressure set point with the system and flow adaptive control curve for pump speed PID (i.e., Proportional/Integral/Derivative) control is understood to be much closer to the system pressure needed to provide the flow rate requested in system. A minimum pumping energy operation control system is also disclosed as well based on the system and flow adaptive control means or technique together with sensorless applications.

Particular Embodiments

An apparatus according to the invention comprises the features of claim 1.

According to some embodiments, the present invention may include one or more of the following features:
The signal processor or processing module may be configured to provide corresponding signaling containing information about the desired pump speeds.

The corresponding signaling may contain information used to control a pumping hydronic system.

The signal processor or processing module may be configured in, or form part of, a central pump control panel.

The zone circulators may include sensors for providing the flow rates, and the apparatus may also include the sensors.

The signal processor or processing module may be configured to receive associated signaling containing information about the system flow rate of $Q^*(t)$ or the pressure of $P^*(t)$ from a flow meter or the pressure sensor, or a sensorless converter, respectively.

For a multiple zones application, the signal processor or processing module may be configured to determine the system flow rate of Q*(t) as a summation of zone flow rates, respectively, using an equation (2.3), as follows:

$$Q^*(t) = \sum_{i=1}^{n} Q_i^*(t) \, , \qquad\qquad (2.3)$$

where $Q_i^*(t)$ is a flow rate at zone i, and n is a total numbers of zones, including where the signal processor or processing module is configured to receive the associated signaling containing information about the system flow rate of $Q_i^*(t)$ or the pressure of P*(t) from a flow meter or the pressure sensor, or a sensorless converter in zone i, respectively.

The signal processor or processing module may be configured to determine associated signaling related to the adaptive moving maximum flow of $\overline{Q}_m$ by a moving average or a moving peak detector upon the system flow of Q using an equation (2.4), as follows:

$$\bar{Q}_m(t) = \begin{cases} MA(Q(t)) \, \forall \, MP(Q(t)), & Q < \bar{Q}_m \\ Q(t), & Q \geq \bar{Q}_m \end{cases} , \qquad (2.4)$$

where the function MA(Q(t)) represents a moving average detector and the function MP(Q(t)) represents a moving peak detector respectively.

The signal processor or processing module may be configured to determine associated signaling containing information about $\overline{P}_m(t)$ by using a flow equation, as follows:

$$\bar{P}_m = (\bar{Q}_m / \bar{C}_v)^2 \, ,$$

including where the signal processor or processing module is configured to determine the associated signaling containing information about an adaptive system characteristics coefficient of $\overline{C}_v$ using equivalent system characteristics coefficient of $C_v$ by using the moving average or maximum detector defined in the equation (2.4) accordingly.

The parameters $\overline{Q}_m$ and $\overline{P}_m$ may vary within ranges of $0 < \overline{Q}_m < \overline{Q}_d$ and $b_0 < \overline{P}_m < \overline{P}_d$, including where the adaptive system characteristics coefficient of $\overline{C}_v$ may be a constant value of $C_v$, e.g., if the system flow is regulated by circulators.

The signal processor or processing module may be configured to determine associated signaling containing information about a design point or duty point of the system flow and pressure of $\overline{Q}_d$ and $\overline{P}_d$, where the system curve may run through a pump curve at a speed designed, using equations (2.5), as follows:

$$\begin{cases} \bar{Q}_d(n_d, \bar{C}_v) = \frac{n_d}{2n_{max}}(-b \pm \sqrt{b^2 - 4c(a - \bar{C}_v^{-2})})/(a - \bar{C}_v^{-2}) \\ \bar{P}_d(n_d, \bar{C}_v) = \left(\frac{\bar{Q}_d}{\bar{C}_v}\right)^2 \end{cases} , \qquad (2.5)$$

where a, b and c are coefficients of a second order best-fit pump curve function, $n_d$ and $n_{max}$ are pump speeds at the design point and an associated maximum respectively.

The signal processor or processing module may be configured to determine associated signaling containing information about a PID function for motor speed of n with respect to an instant system pressure and the adaptive pressure set point using an equation (3.1), as follows:

$$n(t) = pid(P^*(t), P(t)), \qquad\qquad (3.1)$$

where P*(t) is the adaptive pressure set point defined by the equation (2.1), P(t) is an instant system pressure, and pid represents a PID control function.

The signal processor or processing module may be configured to determine associated signaling for a flow follower PID control to achieve a minimum pumping energy operation using an equation (3.2), as follows:

$$n(t) = pid(Q^*(t), Q(t)), \qquad (3.2)$$

where Q*(t) is the system flow set point determined using equation (2.2) with an instant system pressure signal or determined directly for the multiple zones flow signals using equation (2.3), respectively, Q(t) is the instant system flow rate at motor speed of n.

The apparatus may include, or take the form of, system and flow adaptive sensorless pumping control apparatus.

The apparatus may include, or take the form of, a pump control or controller, including a PID control, having the signal processor or signal processor module, e.g., including for a hydronic heating system.

By way of example, the signal processor or processing module may include, or take the form of, at least one signal processor and at least one memory including computer program code, and the at least one memory and computer program code are configured to, with at least one signal processor, to cause the signal processor at least to receive the signaling (or, for example, the associated signaling) and determine the desired pump speeds for the zone circulators. The signal processor or processing module may be configured with suitable computer program code in order to implement suitable signal processing algorithms and/or functionality, consistent with that set forth herein.

The present invention may also take the form of a method according to claim 13.

The method may also include one or more of the features set forth herein, including providing from the signal processor or processing module corresponding signaling containing information about the desired pump speeds for the zone circulators, e.g., which may be used to control a hydronic pumping system.

The present invention may also, e. g., take the form of a computer program product having a computer readable medium with a computer executable code embedded therein for implementing the method, e.g., when run on a signal processing device that forms part of such a pump controller. By way of example, the computer program product may, e. g., take the form of a CD, a floppy disk, a memory stick, a memory card, as well as other types or kind of memory devices that may store such a computer executable code on such a computer readable medium.

The inventors provide a new and unique system and flow adaptive control means or technique for a hydronic pumping heating or cooling system herein. The control curve provided herein may be adaptive not only to a system curve, but a moving maximum flow rate as well. The pressure set point with the system and flow adaptive control curve is effectively much closer to the system pressure needed to provide the flow rate requested in the system. A minimum pumping energy operation control system setup may be provided herein as well based on the system and flow adaptive control means together with sensorless applications. This new and unique system and flow adaptive control means or technique for a hydronic pumping heating or cooling system provides an energy saving control means or technique which is not only adaptive to the system curve, but to flow rate associated with it as well, so that the pumping energy may be saved optimally, thereby solving a problem in the industry and providing an important contribution to the overall state of the art, especially when implemented in such a hydronic pumping heating or cooling system.

BRIEF DESCRIPTION OF THE DRAWING

The drawing includes the following Figures, which are not necessarily drawn to scale:

Figure 1 is a schematic diagram of a hydronic sensorless pumping control system that is known in the art, which may be suitably adapted and reconfigured, e.g., based upon some embodiments of the present invention.

Figure 2 is a graph of pressure (Ft) in relation to flow (GPM) showing pump, system and power characteristics curves and a pressure equilibrium point at a steady state, according to implementation of some embodiments of the present invention.

Figure 3 is a schematic of an energy saving sensorless pumping control configuration, according to implementation of some embodiments of the present invention.

Figure 4 is a block diagram of apparatus, e.g., having a signal processor or processing module configured for implementing the signal processing functionality, according to some embodiments not falling within the wording of claim 1.

DETAILED DESCRIPTION OF THE INVENTION

Figure 2: System and Flow Adaptive Pumping Control Functions

Figure 2 shows a graph that includes a pump curve, a constructive control curve, an adaptive control curve, an adaptive system curve, and a distribution curve, e.g., for implementing a system and flow adaptive pumping control scheme for a hydronic pumping system according to some embodiments of the present invention. For a pumping control application where the instant system flow rate and pressure are available, the system and flow adaptive pump control curve equation is derived, based upon the adaptive system curve as well as a moving maximum system flow rate using equation (2.1), as follows:

$$P^*(t) = \left(\frac{Q^*(t)}{\bar{Q}_m(t)}\right)^{\alpha} \left(\bar{P}_m(t) - b_0\right) + b_0 , \qquad (2.1)$$

where P* represents the adaptive pressure set point, Q* is the system flow rate requested specifically by temperature loads, $b_0$ is the minimum pressure at no flow, $\alpha$ is a control curve setting parameter varying as $1 < \alpha \leq 2$ defined in between a linear curve and a quadratic one, and $\bar{Q}_m$ and $\bar{P}_m$ are the adaptive moving maximum flow and pressure as shown in Fig. 2, respectively. By way of example, equation (2.1) may be suitably named as a system and flow adaptive control function. In case that a flow signal may be used in a flow PID control, the flow set point in the control function is then rewritten using equation (2.2), as follows:

$$Q^*(t) = \left(\frac{P^*(t) - b_0}{P_0 - b_0}\right)^{-\alpha} \bar{Q}_m(t) , \qquad (2.2)$$

Here, a pressure sensor is used to obtain the instant pressure signal of P*.

In Eq. (2.1) or (2.2), the system flow rate of Q* or pressure of P* requested may be provided by a flow meter or a pressure sensor, or a sensorless converter, respectively.

By way of example, for a multiple zones application, the system flow rate of Q* requested may be expressed as the summation of zone flow rates respectively, or by using equation (2.2), as follows:

$$Q^*(t) = \sum_{i=1}^{n} Q_i^*(t) , \qquad (2.3)$$

where $Q_i^*$ is the flow rate at zone i and n is the total numbers of zones, which is again may be provided by a flow meter or a pressure sensor, or a sensorless converter in zone i, respectively.

In general, and by way of example, the adaptive moving maximum flow of $\bar{Q}_m$ can be obtained by a moving average or a moving peak detector upon the system flow of Q as

$$\bar{Q}_m(t) = \begin{cases} MA(Q(t)) \vee MP(Q(t)), & Q < \bar{Q}_m \\ Q(t), & Q \geq \bar{Q}_m \end{cases} , \qquad (2.4)$$

where MA represents a moving average detector and MP represents a moving peak detector respectively. $\bar{P}_m$ may be obtained by the flow equation of $\bar{P}_m = (\bar{Q}_m/\bar{C}_v)^2$. The adaptive system characteristics coefficient of $\bar{C}_v$ may be obtained similarly from the equivalent system characteristics coefficient of $C_v$ by using the moving average or maximum detector defined in Eq. 2.4 accordingly. $\bar{Q}_m$ and $\bar{P}_m$ may vary within $0 < \bar{Q}_m < \bar{Q}_d$ and $b_0 < \bar{P}_m < \bar{P}_d$ which are shown in Fig. 2. Note that the adaptive system characteristics coefficient of $\bar{C}_v$ may be a constant value of $C_v$, e.g., if system flow is regulated by circulators.

By way of example, the design point or duty point of system flow and pressure of $\bar{Q}_d$ and $\bar{P}_d$, where the system curve may run through a pump curve at a speed designed, can be obtained by following the approach in the aforementioned reference no. [6] as, or by using equation (2.5), as follows:

$$\begin{cases} \bar{Q}_d(n_d, \bar{C}_v) = \frac{n_d}{2n_{max}} \left(-b \pm \sqrt{b^2 - 4c(a - \bar{C}_v^{-2})}\right)/(a - \bar{C}_v^{-2}) \\ \bar{P}_d(n_d, \bar{C}_v) = \left(\frac{\bar{Q}_d}{\bar{C}_v}\right)^2 \end{cases} , \qquad (2.5)$$

where a, b and c are the coefficients of a second order best-fit pump curve function, $n_d$ and $n_{max}$ are pump speeds at design point and its maximum respectively. It is noted that when $b_0$ is set to be zero and control curve coefficient of $\alpha$ is set to be quadratic curve of 2, the control curve is then overlapped with the system curve.

In comparison with other pressure control set point algorithms, means or techinique, which have a fixed control curve defined by $(b_0, 0)$ and $(P_d, Q_d)$, the control equations in Eqs. 2.1 or 2.2 are adaptive not only to system characteristics variation but to the moving maximum flow rate associated with as well. The pressure set point values with the system and flow adaptive control curve for a PID motor speed control may be, therefore, much closer to the system characteristics curve. Under that, the pump operation energy and cost for a hydronic heating or cooling pumping system may be saved significantly.

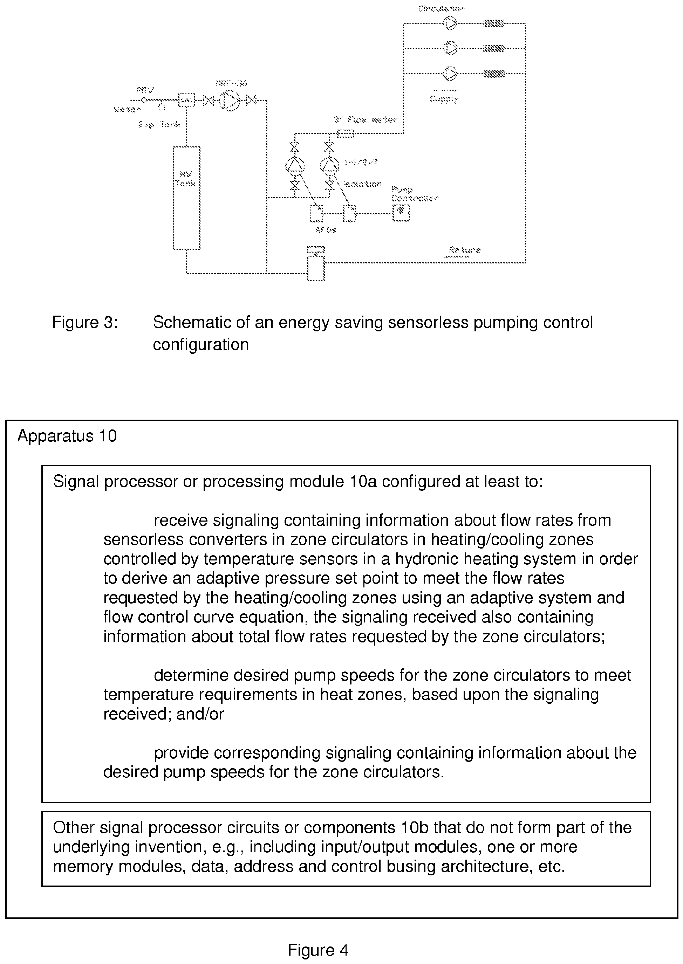

Figure 3: Energy Saving Sensorless Pumping Control Configurations

Following the adaptive system and flow control concepts and methods disclosed above, energy saving sensorless pumping control configurations may be provided for a sensorless pumping control configuration as shown schematically in Fig. 3. As shown, and by way of example, the sensorless pumping control configuration may include a first pumping configuration having a hot water tank (HW tank or boiler), an EAS device and a pump (e.g., an NRF-36 pump) and associated valves (e.g., isolation valves), in combination with a second pumping configuration having pumps, other associated valves (e.g., other isolation valves), a flow meter, circulators, and a pump controller connected to the pumps via AFDs.

For example, three way valves associated with its bypass pipelines in the conventional constant pumping hydronic heating system in Fig 1 may be removed completely from the zones. The total flow generated in the zones through circulators may then be correlated directly to the flow supplied by secondary loop pumps. There would be substantially no unnecessary energy waste in zones, i.e., no energy loss due to flow dynamic friction through bypass pipelines and three way valves. There is also no hot water thermal energy loss in bypass lines as well. Moreover, the adaptive system and flow control means or technique disclosed herein may be incorporated optimally with this minimum pumping energy operation configuration presented here.

According to the present invention, the control system operation may be implemented as follows. First, the desired flow rates to meet the temperature requirements in zones may be generated by zone circulators controlled by temperature sensors, respectively. The flow rates signals from the circulator's sensorless converters may then be transmitted to the central pump control panel, through a wire, a wireless or a communication protocol means accordingly. The adaptive pressure set point to meet the flow rates requested by zones may then be set up with the adaptive system and flow control curve equation defined in Eq. 2.1. The pump speed desired for the total flow rate in secondary loop may then be obtained through a PID control accordingly with respect to the instant system pressure and the adaptive pressure set point derived.

The PID function for motor speed of n with respect to the instant system pressure and the adaptive pressure set point mentioned above may be presented as

$$n(t) = pid(P^*(t), P(t)), \qquad (3.1)$$

where P* is the adaptive pressure set point defined by Eq. 2.1, P is the instant system pressure, and pid represents a PID control. As discussed previously, the adaptive system and flow control curve defined by Eq. 2.1 is actually coincided with the system curve exactly, if $b_0$ is set to be zero and the control curve coefficient of $\alpha$ is set to be the quadratic curve of 2. The adaptive pressure set point set up is then the same to the system pressure needed to meet the flow rate requirement by zones. The minimum pumping energy operation may be achieved accordingly.

In particular, a flow follower PID control may be introduced as well to achieve the minimum pumping energy operation the same as the adaptive pressure set point PID control presented above. The flow follower PID control disclosed herein may be expressed as, e.g., using the equation (3.2), as follows:

$$n(t) = pid(Q^*(t), Q(t)), \qquad (3.2)$$

where Q* is the system flow set point defined by Eq. 2.2 with an instant system pressure signal or derived directly for the multiple zones flow signals by Eq. 2.3, respectively, Q is the instant system flow rate at motor speed of n. Equation 3.2 defines a flow follower PID pump speed control, in which the system flow rate follows the total flow rate requested to meet the heating or cooling requirement at zones, respectively. Equations 2.1 through 2.5 defined in the previous description above may then be used to provide the instant pressure and flow at a steady state of the pumping system as well as the design pressure values as well.

For the flow rate regulated by circulators as shown in Fig. 3, either Eq. 3.1 or Eq. 3.2 may be used to achieve desired pump speed based upon the adaptive set point to meet the temperature requirement in zones, as long as the total flow rate requested by circulators is provided. The minimum pumping energy operation may then be realized accordingly. It has to be noted that the system and flow adaptive pumping control means may be fulfilled again by a flow meter or a pressure sensor, or a sensorless converter as well, respectively.

Figure 4:

By way of example, Figure 4 shows apparatus 10 featuring a signal processor or processing module 10a configured at least to:

receive signaling containing information about flow rates from sensorless converters in zone circulators in heating/cooling zones controlled by temperature sensors in a hydronic heating system in order to derive an adaptive pressure set point to meet the flow rates requested by the heating/cooling zones using an adaptive system and flow control curve equation, the signaling received also containing information about total flow rates requested by the zone circulators; and
determine desired pump speeds for the zone circulators to meet temperature requirements in heat zones, based upon the signaling received.

In operation, the signal processor or processing module may be configured to provide corresponding signaling containing information about the desired pump speeds. The corresponding signaling may contain information used to control a pumping hydronic system.

The signal processor or processing module may be configured in, or form part of, a central pump control panel, e.g., which may include or be implemented in conjunction with the control or controller shown in Figure 3.

The zone circulators in Figure 3 may include sensors for providing the flow rates.

As a person skilled in the art would appreciate and understand, the present invention may be implemented using pump and system characteristics equations and empirical power equations, e.g., consistent with that set forth herein.

By way of example, the functionality of the apparatus 10 may be implemented using hardware, software, firmware, or a combination thereof. In a typical software implementation, the apparatus 10 would include one or more microprocessor-based architectures having, e. g., at least one signal processor or microprocessor like element 10a. A person skilled in the art would be able to program such a microcontroller-based, or microprocessor-based, implementation to perform the functionality described herein without undue experimentation. For example, the signal processor or processing module 10a may be configured, e.g., by a person skilled in the art without undue experimentation, to receive the signaling containing information about flow rates from sensorless converters in zone circulators in heating/cooling zones controlled by temperature sensors in a hydronic heating system in order to derive an adaptive pressure set point to meet the flow rates requested by the heating/cooling zones using an adaptive system and flow control curve equation, the signaling received also containing information about total flow rates requested by the zone circulators, consistent with that disclosed herein.

The scope of the invention is not intended to be limited to any particular implementation. The scope of the invention is intended to include implementing the functionality of the processors 10a as stand-alone processor, signal processor, or signal processor module, as well as separate processor or processor modules, as well as some combination thereof.

The apparatus 10 may also include, e.g., other signal processor circuits or components 10b, including random access memory or memory module (RAM) and/or read only memory (ROM), input/output devices and control, and data and address buses connecting the same, and/or at least one input processor and at least one output processor, e.g., which would be appreciate by a person skilled in the art.

Various Points of Novelty

The present invention may also include, or take the form of, one or more of the following various embodiments: For example, according to some embodiments the present invention may take the form of, or may be implemented as, a system and flow adaptive pump control means or technique for a hydronic pumping system may include an adaptive pump control curves equation based upon the moving maximum system flow rate requested from zones as well as the moving average equivalent hydronic system characteristics curve. In operation, the pressure set point from the system and flow adaptive control curve equations for pump speed PID controls is much closer to the system pressure needed to provide the flow rate requested in system, so that the pumping operation energy may be saved. The present invention is implemented using the version of the system and flow adaptive pump control means or technique for a hydronic pumping system including the system and flow adaptive pump control equations means which are defined as Eq. 2.1 or Eq. 2.2, with which the adaptive pressure or flow set point may be derived based upon the moving maximum system flow rate requested by zones defined by Eqs. 2.3-2.4 as well as the moving average system characteristics curve, and shown schematically in Fig. 2.

According to some embodiments, the present invention may be implemented using one preferred version of the system and flow adaptive pump control means for a hydronic pumping system may include a minimum pumping energy operation system configuration integrated with sensors or sensorless converters means as shown schematically in Fig. 3. The minimum pumping energy operation system may be achieved with minimum pressure $b_0$ is set to be zero and the control curve parameter $\alpha$ is set to be quadratic in Eq. 2.1. The pump speed may then be determined through a PID function of Eq. 3.1.

According to some embodiments, the present invention may be implemented using one preferred version of the minimum pumping energy operation system configuration integrated with sensors or sensorless converters means as shown schematically in Fig. 2, e.g., that may include a flow follower PID control by Eq. 3.2 as well, where Q* is the system flow set point defined by Eq. 2.2 with an instant system pressure signal monitored or derived directly for the multiple zones flow signals by Eqs. 2.3 and 2.4, respectively, Q is the instant system flow rate at motor speed of n. Equation 3.2 may define a flow follower PID pump speed control, in which the system flow rate follows the total flow rate requested to meet the heating or cooling requirement at zones, respectively.

According to some embodiments, the present invention may be implemented using one preferred version of the sensorless converters means or technique for a hydronic pumping system, e.g., that may include a sensorless convertor based upon pump motor operation readings which yields the system pressure and flow rate, which may be used for the system and flow adaptive pump control curve means. The sensorless convertor means or technique can be a discrete calibration modeling means or theoretical modeling ones.

According to some embodiments, the present invention may be implemented using the minimum pumping energy operation systems that may include close-loop hydronic systems or open loop hydronic systems, as in primary pumping, secondary pumping, water circulating, or pressure booster. The systems mentioned here may consist of a single zone or multiple zones.

According to some embodiments, the present invention may be implemented using the control and signals generating and monitoring transmitting and wiring technologies may include all conventional sensing and transmitting means that are used currently. Preferably, wireless signals transmission technologies or communication protocol may be provided as optimal and favorable solutions.

According to some embodiments, the present invention may be implemented using the pumps mentioned herein for hydronic pumping systems may include a single pump, a circulator, a group of parallel ganged pumps or circulators, a group of serial ganged pumps or circulators, or their combinations.

According to some embodiments, the present invention may be implemented using the systems flow regulation, e.g., that may include manual or automatic control valves, manual or automatic control circulators, or their combinations.

The Scope of the Invention

It should be understood that, unless stated otherwise herein, any of the features, characteristics, alternatives or modifications described regarding a particular embodiment herein may also be applied, used, or incorporated with any other embodiment described herein. Also, the drawings herein are not drawn to scale.

Claims

1.  Apparatus (10) comprising:

a signal processor or processing module (10a), the signal processor or processing module (10a) is configured at least to:
receive signaling containing information about flow rates from sensorless converters in zone circulators in heating/cooling zones controlled by temperature sensors in a hydronic heating system in order to derive an adaptive pressure set point (P*(t)) to meet the flow rates requested by the heating/cooling zones using an adaptive system and flow control curve equation, the signaling received also containing information about total flow rates requested by the zone circulators; and
determine corresponding signaling information about desired pump speeds (n) for the zone circulators to meet temperature requirements in heat zones, based upon the signaling received;
determine an adaptive pump control curve equation based upon an adaptive system curve and as a moving maximum system flow rate that depends on a relationship between an adaptive pressure set point (P*(t)), a system flow rate requested by temperature loads, a minimum pressure at no flow, a control curve setting parameter, and an adaptive moving maximum flow and pressure, and determine

1) the adaptive pump control curve equation based upon the adaptive system curve and as the moving maximum system flow rate using an equation (2.1), as follows:

$$P^*(t) = \left(\frac{Q^*(t)}{\bar{Q}_m(t)}\right)^{\alpha} (\bar{P}_m(t) - b_0) + b_0, \qquad (2.1)$$

where P*(t) represents the adaptive pressure set point,
$Q^*(t)$ is the system flow rate requested by the temperature loads, $b_0$ is the minimum pressure at no flow, $\alpha$ is the control curve setting parameter varying as $1 \leq \alpha \leq 2$ defined in between a linear curve and a quadratic one, and $\bar{Q}_m(t)$ and $\bar{P}_m(t)$ are the adaptive moving maximum flow and pressure; or

2) a flow signal for use in a flow PID control technique based upon a flow set point in a control function using an equation (2.2), as follows:

$$Q^*(t) = \left(\frac{P^*(t) - b_0}{P_0 - b_0}\right)^{-\alpha} \bar{Q}_m(t), \qquad (2.2)$$

including where the signal processor or processing module (10a) is configured to receive the instant pressure signal of P*(t) from a pressure sensor.

2. Apparatus (10) according to claim 1, wherein the signal processor or processing module (10a) is configured to provide corresponding signaling containing information about the desired pump speeds (n), including where the corresponding signaling contains information used to control a pumping hydronic system.

3. Apparatus (10) according to claim 1, wherein the signal processor or processing module (10a) is configured in, or forms part of, a central pump control panel, or where the zone circulators include sensors for providing the flow rates.

4. Apparatus (10) according to claim 1, wherein the signal processor or processing module (10a) is configured to receive associated signaling containing information about the system flow rate of Q*(t) or the pressure of P*(t) from a flow meter or the pressure sensor, or a sensorless converter, respectively.

5. Apparatus (10) according to claim 1, wherein, for a multiple zones application, the signal processor or processing module (10a) is configured to determine the system flow rate of Q*(t) as a summation of zone flow rates, respectively, using an equation (2.3), as follows:

$$Q^*(t) = \sum_{i=1}^{n} Q_i^*(t), \qquad (2.3)$$

where $Q_i^*(t)$ is a flow rate at zone i, and n is a total numbers of zones, including where the signal processor or processing module (10a) is configured to receive the associated signaling containing information about the system flow rate of $Q_i^*(t)$ or the pressure of P*(t) from a flow meter or the pressure sensor, or a sensorless converter in zone i, respectively.

6. Apparatus (10) according to claim 1, wherein the signal processor or processing module (10a) is configured to determine associated signaling related to the adaptive moving maximum flow of $\bar{Q}_m$ by a moving average or a moving peak detector upon the system flow of Q using an equation (2.4), as follows:

$$\bar{Q}_m(t) = \begin{cases} MA(Q(t)) \ \forall \ MP(Q(t)), & Q < \bar{Q}_m \\ Q(t), & Q \geq \bar{Q}_m \end{cases}, \qquad (2.4)$$

where the function MA(Q(t)) represents a moving average detector and the function MP(Q(t)) represents a moving peak detector respectively.

**7.** Apparatus (10) according to claim 6, wherein the signal processor or processing module (10a) is configured to determine associated signaling containing information about $\bar{P}_m$ (t) by using a flow equation, as follows:

$$\bar{P}_m = (\bar{Q}_m / \bar{C}_v)^2,$$

including where the signal processor or processing module (10a) is configured to determine the associated signaling containing information about an adaptive system characteristics coefficient of $\bar{C}_v$ using equivalent system characteristics coefficient of $C_v$ by using the moving average or maximum detector defined in the equation (2.4) accordingly.

**8.** Apparatus (10) according to claim 1, wherein the parameters $\bar{Q}_m$ and $\bar{P}_m$ vary within ranges of $0 < \bar{Q}_m < \bar{Q}_d$ and $b_0 < \bar{P}_m < \bar{P}_d$, including where the adaptive system characteristics coefficient of $\bar{C}_v$ is a constant value of $C_v$, if the system flow is regulated by circulators.

**9.** Apparatus (10) according to claim 1, wherein the signal processor or processing module (10a) is configured to determine associated signaling containing information about a design point or duty point of the system flow and pressure of $\bar{Q}_d$ and $\bar{P}_d$, where the system curve may run through a pump curve at a speed designed, using equations (2.5), as follows:

$$\begin{cases} \bar{Q}_d(n_d, \bar{C}_v) = \frac{n_d}{2n_{max}} (-b \pm \sqrt{b^2 - 4c(a - \bar{C}_v^{-2})})/(a - \bar{C}_v^{-2}) \\ \bar{P}_d(n_d, \bar{C}_v) = \left(\frac{\bar{Q}_d}{\bar{C}_v}\right)^2 \end{cases}, \qquad (2.5)$$

where a, b and c are coefficients of a second order best-fit pump curve function, $n_d$ and $n_{max}$ are pump speeds at the design point and an associated maximum respectively.

**10.** Apparatus (10) according to claim 1, wherein the signal processor or processing module (10a) is configured to determine associated signaling containing information about a PID function for motor speed of n with respect to an instant system pressure and the adaptive pressure set point (P*(t)) using an equation (3.1), as follows:

$$n(t) = pid(P^*(t), P(t)), \qquad (3.1)$$

where P*(t) is the adaptive pressure set point (P*(t)) defined by the equation (2.1), P(t) is an instant system pressure, and pid represents a PID control function.

**11.** Apparatus (10) according to claim 9, wherein the signal processor or processing module (10a) is configured to determine associated signaling for a flow follower PID control to achieve a minimum pumping energy operation using an equation (3.2), as follows:

$$n(t) - pid(Q^*(t), Q(t)), \qquad (3.2)$$

where Q*(t) is the system flow set point determined using equation (2.2) with an instant system pressure signal or determined directly for the multiple zones flow signals using equation (2.3), respectively, Q(t) is the instant system flow rate at motor speed of n.

**12.** Apparatus (10) according to claim 1, wherein the apparatus comprises system and flow adaptive sensorless pumping control apparatus.

**13.** A method **characterized by**:

receiving with a signal processor or processing module (10a) signaling containing information about flow rates from sensorless converters in zone circulators in heating/cooling zones controlled by temperature sensors in a hydronic heating system in order to derive an adaptive pressure set point (P*(t)) to meet the flow rates requested by the heating/cooling zones using an adaptive system and flow control curve equation, the signaling received also containing information about total flow rates requested by the zone circulators; and

determining with the signal processor or processing module (10a) desired pump speeds (n) for the zone circulators to meet temperature requirements in heat zones, based upon the signaling received; determining with the signal processor or processing module an adaptive pump control curve equation based upon an adaptive system curve and as a moving maximum system flow rate that depends on a relationship between an adaptive pressure set point, a system flow rate requested by temperature loads, a minimum pressure at no flow, a control curve setting parameter, and an adaptive moving maximum flow and pressure; and

determining with the signal processor or processing module:

1) the adaptive pump control curve equation based upon the adaptive system curve and as the moving maximum system flow rate using an equation (2.1), as follows:

$$P^*(t) = \left(\frac{Q^*(t)}{\bar{Q}_{m(t)}}\right)^{\alpha} (\bar{P}_m(t) - b_0) + b_0, \qquad (2.1)$$

where $P^*$ (t) represents the adaptive pressure set point,
$Q^*$ (t) is the system flow rate requested by the temperature loads, $b_0$ is the minimum pressure at no flow, $\alpha$ is the control curve setting parameter varying as $1 \leq \alpha \leq 2$ defined in between a linear curve and a quadratic one, and $\bar{Q}_m$ (t) and $\bar{P}_m$ (t) are the adaptive moving maximum flow and pressure; or

2) a flow signal for use in a flow PID control technique based upon a flow set point in a control function using an equation (2.2), as follows:

$$Q^*(t) = \left(\frac{P^*(t) - b_0}{P_0 - b_0}\right)^{-\alpha} \bar{Q}_m(t), \qquad (2.2)$$

including where the signal processor or processing module is configured to receive the instant pressure signal of $P^*$ (t) from a pressure sensor.

**14.** A method according to claim 13, wherein the method comprises providing from the signal processor or processing module (10a) corresponding signaling containing information about the desired pump speeds, including where the corresponding signaling contains information used to control a pumping hydronic system.

**15.** A method according to claim 13, wherein the method comprises one of the following:
configuring the signal processor or processing module (10a) in, or forming the signal processor or processing module (10a) as part of, a central pump control panel; or configuring the zone circulators with sensors for providing the flow rates.

**Patentansprüche**

**1.** Vorrichtung (10) umfassend:

Einem Signalprozessor oder Verarbeitungsmodul (10a),
wobei der Signalprozessor oder das Verarbeitungsmodul (10a) mindestens konfiguriert ist, um:

Signale zu empfangen, die Informationen enthalten über Durchflussraten von sensorlosen Konvertern in Zonen-Zirkulatoren in Heiz-/Kühlzonen, die gesteuert werden von Temperatursensoren in einem hydronischen Heizsystem, um einen adaptiven Drucksollwert (P*(t)) abzuleiten, um die Durchflussraten zu erreichen, die von den Heiz-/Kühlzonen angefordert werden, unter Verwendung eines adaptiven Systems und einer Durchflusssteuerungskurvengleichung,

wobei die empfangenen Signale auch Informationen über die Gesamtdurchflussraten enthalten, die von den Zonen-Zirkulatoren angefordert werden; und

entsprechende Signalinformationen zu ermitteln über gewünschte Pumpendrehzahlen (n) für die Zonen-Zirkulatoren zur Erfüllung der Temperaturanforderungen in den Heizzonen, basierend auf den empfangenen Signalen;

eine adaptive Pumpensteuerkurvengleichung zu bestimmen, basierend auf einer adaptiven Systemkurve und als ein gleitendes Maximum der Systemdurchflussrate, das abhängt von einer Beziehung zwischen einem adaptiven Drucksollwert (P* (t)), einer von Temperatur-Lasten angeforderten Systemdurchflussrate, einem Mindestdruck bei keinem Durchfluss, einem Steuerkurveneinstellparameter und einem adaptiven Maximaldurchfluss und -Druck, und

zu bestimmen

1) die adaptive Pumpensteuerkurvengleichung basierend auf der auf der adaptiven Systemkurve und als das gleitende Maximum der Systemdurchflussrate unter Verwendung einer Gleichung (2.1), wie folgt:

$$P^*(t) = \left(\frac{Q^*(t)}{\bar{Q}_m(t)}\right)^\alpha \left(\bar{P}_m(t) - b_0\right) + b_0 \qquad (2.1)$$

wobei P*(t) den adaptiven Drucksollwert darstellt,

Q*(t) ist die Systemdurchflussrate, die von den Temperaturlasten angefordert wird, $b_0$ ist der Mindestdruck bei keinem Durchfluss,
$\alpha$ ist der Steuerkurveneinstellparameter, der zwischen $1 \leq \alpha \geq 2$ variiert, definiert zwischen einer linearen Kurve und einer quadratischen Kurve, und $\bar{Q}m$ (t) und $\bar{P}m$ (t) sind das adaptive gleitende Maximum von Durchfluss und Druck; oder

2) ein Durchflusssignal zur Verwendung in einer PID-Durchfluss-Regelungs-Technik basierend auf einem Durchflusssollwert in einer Kontrollfunktion unter Verwendung einer Gleichung (2.2), wie folgt:

$$Q^*(t) = \left(\frac{P^*(t) - b_0}{P_0 - b_0}\right)^{-\alpha} \bar{Q}_m(t), \qquad (2.2)$$

einschließend, dass der Signalprozessor oder das Verarbeitungsmodul (10a) so konfiguriert ist, dass es das aktuelle Drucksignal P*(t) von einem Drucksensor empfängt.

**2.** Vorrichtung (10) nach Anspruch 1, wobei der Signalprozessor oder das Verarbeitungsmodul (10a) konfiguriert ist, um entsprechende Signale bereitstellen, die Informationen enthalten über die gewünschten Pumpendrehzahlen (n), einschließend, dass die entsprechenden Signale Informationen enthalten, die verwendet werden, um ein pumpendes Hydroniksystem zu steuern.

**3.** Vorrichtung (10) nach Anspruch 1, wobei der Signalprozessor oder das Verarbeitungsmodul (10a) ist konfiguriert in oder ist Teil einer zentralen Pumpenschalttafel, oder wo die Zonen-Zirkulatoren Sensoren zur Bereitstellung der Durchflussraten enthalten.

**4.** Vorrichtung (10) nach Anspruch 1, wobei der Signalprozessor oder das Verarbeitungsmodul (10a) konfiguriert ist, um zugehörige Signale zu empfangen, die Informationen enthalten über die Systemdurchflussrate Q*(t) oder des Drucks P*(t) von einem Durchflussmesser oder dem Drucksensor oder einem entsprechenden sensorlosen Konverter.

**5.** Vorrichtung (10) nach Anspruch 1, wobei für eine Mehr-Zonen-Anwendung, der Signalprozessor oder das Verarbeitungsmodul (10a) konfiguriert ist, um die Systemdurchflussrate Q*(t) zu bestimmen als Summe der Zonendurchflussraten, jeweils unter Verwendung einer Gleichung (2.3), wie folgt:

$$Q^*(t) = \sum_{i=1}^{n} Q_i^*(t) , \qquad (2.3)$$

wobei $Q_i^* t$ eine Durchflussrate in Zone i ist, und n ist eine Zahl der Zonen, einschließlich der Zonen, in denen der Signalprozessor oder das Verarbeitungsmodul (10a) konfiguriert ist, um die zugehörigen Signale zu empfangen, die Informationen enthalten über die Systemdurchflussrate Qi (t) oder den Druck P*(t) aus einem Durchflussmesser oder dem Drucksensor, oder einem sensorlosen Konverter in Zone i.

6. Vorrichtung (10) nach Anspruch 1, wobei der Signalprozessor oder das Verarbeitungsmodul (10a) konfiguriert ist, um die zugehörigen Signale zu bestimmen in Bezug auf das adaptive gleitende Durchflussmaximum $\overline{Q}m$ durch einen gleitenden Mittelwert oder einen gleitenden Spitzenwert-Detektor auf den Systemdurchfluss Q unter Verwendung einer Gleichung (2.4), wie folgt:

$$\overline{Q}_m(t) = \begin{cases} MA(Q(t)) \ \forall \ MP(Q(t)), & Q < \overline{Q}_m \\ Q(t), & Q \geq \overline{Q}_m \end{cases}, \qquad (2.4)$$

wobei die Funktion MA(Q(t)) einen gleitenden Mittelwert-Detektor darstellt, und die Funktion MP(Q(t)) einen entsprechenden gleitenden Spitzenwert-Detektor darstellt.

7. Vorrichtung (10) nach Anspruch 6, wobei der Signalprozessor oder das Verarbeitungsmodul (10a) konfiguriert ist, um die zugehörigen Signale zu bestimmen, die Informationen enthalten über $\overline{P}m(t)$, unter Verwendung der folgenden Strömungsgleichung:

$$\overline{P}_m = (\overline{Q}_m/\overline{C}_v)^2 ,$$

einschließend, dass der Signalprozessor oder das Verarbeitungsmodul (10a) konfiguriert ist, um die zugehörigen Signale zu bestimmen, die Informationen enthalten über einen adaptiven System-Charakteristik-Koeffizienten $\overline{C}v$ unter Verwendung eines äquivalenten System-Koeffizienten $\overline{C}v$ unter Verwendung des gleitenden Mittelwert- oder Spitzenwert-Detektors, definiert in der Gleichung (2.4).

8. Vorrichtung (10) nach Anspruch 1, wobei die Parameter $\overline{Q}m$ und $\overline{P}m$ variieren in Bereichen $0<\overline{Q}m<\overline{Q}d$ und $b_0<\overline{P}m<\overline{P}d$, einschließlich der Fälle, in denen der adaptive System-Charakteristik-Koeffizient $\overline{C}v$ ein konstanter Wert $\overline{C}v$ ist, wenn der Systemfluss durch Zirkulatoren geregelt wird.

9. Vorrichtung (10) nach Anspruch 1, wobei der Signalprozessor oder das Verarbeitungsmodul (10a) konfiguriert ist, um die zugehörigen Signale zu bestimmen, die Informationen enthalten über einen Auslegungspunkt oder Betriebspunkt des Systemdurchflusses und Drucks $\overline{Q}d$ und $\overline{P}d$, wo die Systemkurve verlaufen kann durch eine Pumpenkurve bei einer Drehzahl, bestimmt unter Verwendung der Gleichungen (2.5), wie folgt:

$$\begin{cases} \overline{Q}_d(n_d, \overline{C}_v) = \frac{n_d}{2n_{max}} (-b \pm \sqrt{b^2 - 4c(a - \overline{C}_v^{-2})})/(a - \overline{C}_v^{-2}) \\ \overline{P}_d(n_d, \overline{C}_v) = \left(\frac{\overline{Q}_d}{\overline{C}_v}\right)^2 \end{cases}, \qquad (2.5)$$

wobei a, b und c Koeffizienten einer Best-Fit-Pumpenkurvenfunktion zweiter Ordnung sind, $n_d$ und $n_{max}$ sind Pumpendrehzahlen im Auslegungspunkt und einem entsprechenden Maximum.

10. Vorrichtung (10) nach Anspruch 1, wobei der Signalprozessor oder das Verarbeitungsmodul (10a) konfiguriert ist, um die zugehörigen Signale zu bestimmen, die Informationen enthalten über eine PID-Funktion für die Motordrehzahl n in Bezug auf einen aktuellen Systemdruck und den eingestellten adaptiven Druck-Sollwert (P*(t)) unter Verwendung einer Gleichung (3.1) wie folgt:

$$n(t) = pid(P^*(t), P(t)), \qquad (3.1)$$

wobei P*(t) der adaptive Drucksollwert (P*(t)) ist, definiert durch die Gleichung (2.1), P(t) ist ein aktueller Systemdruck, und pid stellt eine PID-Regelfunktion dar.

11. Vorrichtung (10) nach Anspruch 9, wobei der Signalprozessor oder das Verarbeitungsmodul (10a) konfiguriert ist, um zu bestimmen die zugehörigen Signale für eine PID-Durchfluss-Folge-Steuerung, um einen Betrieb mit minimaler Pumpenergie zu erreichen unter Verwendung einer Gleichung (3.2), wie folgt:

$$n(t) - pid(Q^*(t), Q(t)), \qquad (3.2)$$

wobei Q*(t) der System-Durchflusssollwert ist, der bestimmt wird unter Verwendung von Gleichung (2.2) mit einem aktuellen Systemdrucksignal oder direkt bestimmt wird für die Durchflusssignale mehrerer Zonen unter Verwendung der Gleichung (2.3), wobei Q(t) der aktuelle Systemdurchfluss bei einer Motordrehzahl n ist.

12. Vorrichtung (10) nach Anspruch 1, wobei die Vorrichtung umfasst ein system- und strömungsadaptives sensorloses Pumpensteuergerät.

13. Ein Verfahren, **gekennzeichnet durch**:

Empfangen mit einem Signalprozessor oder VerarbeitungsModul (10a) Signale mit Informationen über Durchfluss-Raten von sensorlosen Wandlern in Zonen-Zirkulatoren in Heiz-/Kühlzonen, die durch Temperatursensoren gesteuert werden, in einem hydronischen Heizsystem zur Ableitung einer adaptiver Drucksollwert (P*(t)) um die von den Heiz-/Kühlzonen angeforderten Durchfluss-Raten zu erreichen, unter Verwendung einer adaptiven System- und Durchflusssteuerkurvengleichung, die empfangenen Signale enthalten auch Informationen über die von den Zonenumwälzpumpen angeforderten Gesamtdurchflussraten; und
Bestimmen mit dem Signalprozessor oder VerarbeitungsModul (10a) gewünschte Pumpendrehzahlen (n) für die Zonen-Zirkulatoren zur Erfüllung der Temperaturanforderungen in Heizzonen, basierend auf den empfangenen Signalen;
Bestimmen mit dem Signalprozessor oder dem VerarbeitungsModul eine adaptive Pumpensteuerkurvengleichung basierend auf einer adaptiven Systemkurve und als gleitende maximale Systemdurchflussrate, die von einer Beziehung zwischen einem adaptiven Drucksollwert, einer Systemdurchflussrate, die abhängt von den angeforderten Temperaturlasten, einem Mindestdruck bei keiner Strömung, einem Steuerkurven-Einstellparameter und einem adaptiven maximalen Durchfluss und Druck; und
Bestimmen mit dem Signalprozessor oder VerarbeitungsModul:

1) die adaptive Pumpensteuerkurvengleichung basierend auf der adaptiven Systemkurve und als die gleitende maximale Systemdurchflussrate unter Verwendung einer Gleichung (2.1) wie folgt:

$$P^*(t) = \left(\frac{Q^*(t)}{\bar{Q}_m(t)}\right)^{\alpha} (\bar{P}_m(t) - b_0) + b_0, \qquad (2.1)$$

wobei P*(t) den adaptiven Drucksollwert darstellt,
Q*(t) ist die Systemdurchflussrate, die von den Temperaturlasten abhängt, $b_0$ ist der Mindestdruck bei keiner Strömung, $\alpha$ ist der Einstellparameter der Steuerkurve, der variiert als $1 \leq \alpha \leq 2$ definiert zwischen einer linearen Kurve und einer quadratischen Kurve, und $\bar{Q}$ m(t) und $\bar{P}$ m(t) sind das gleitende Maximum von Durchfluss und Druck; oder

2) ein Flusssignal zur Verwendung in einer PID-Durchflussregelung-Technik, die auf einem Durchflusssollwert in einer Steuerung basiert Funktion unter Verwendung einer Gleichung (2.2), wie folgt:

$$Q^*(t) = \left(\frac{P^*(t)-b_0}{P_0-b_0}\right)^{-\alpha} \bar{Q}_m(t), \qquad (2.2)$$

einschließend, dass Signalprozessor oder das Verarbeitungsmodul konfiguriert ist, um das aktuelle Drucksignal $P^*$(t) von einem Drucksensor zu empfangen.

14. Verfahren nach Anspruch 13, wobei das Verfahren umfasst die Bereitstellung durch den Signalprozessor oder das Verarbeitungsmodul (10a) entsprechende Signale, die Informationen über die gewünschten Pumpendrehzahlen enthalten, einschließend, dass die entsprechenden Signale Informationen enthalten, die zur Steuerung eines pumpenden Hydroniksystems verwendet werden.

15. Verfahren nach Anspruch 13, wobei das Verfahren mindestens umfasst einen der folgenden Schritte:

Konfigurieren des Signalprozessors oder Verarbeitungsmoduls (10a) in, oder bilden des Signalprozessor oder des Verarbeitungs-Moduls (10a) als Teil einer zentralen Pumpenschalttafel; oder
Konfigurieren der Zonenzirkulatoren mit Sensoren für Bereitstellung der Flussraten.

**Revendications**

1. Appareil (10) comprenant:

un processeur de signal ou un module de traitement (10a),
le processeur de signal ou le module de traitement (10a) étant configuré au moins pour:

recevoir une signalisation contenant des informations sur les débits provenant de convertisseurs sans capteur dans les circulateurs de zone des zones de
chauffage/refroidissement contrôlées par des capteurs de température dans un système de chauffage hydronique afin de dériver une valeur de consigne de pression adaptative (P*(t)) pour répondre aux débits demandés par les zones de chauffage/refroidissement en utilisant un système adaptatif et une équation de courbe de contrôle de débit, la signalisation reçue contenant également des informations sur les débits totaux demandés par les circulateurs de zone; et
déterminer les informations de signalisation correspondantes sur les vitesses de pompe souhaitées (n) pour les circulateurs de zone afin de répondre aux exigences de température dans les zones de chauffage, sur la base de la signalisation reçue;
déterminer une équation de courbe de contrôle de pompe adaptative basée sur une courbe de système adaptative et comme un débit de système maximum mobile qui dépend d'une relation entre un point de consigne de pression adaptative (P*(t)), un débit de système demandé par les charges de température, une pression minimum à débit nul, un paramètre de réglage de courbe de contrôle, et un débit et une pression maximum mobile adaptative, et
déterminer

1) l'équation de la courbe de contrôle adaptative de la pompe basée sur la courbe du système adaptatif et comme le débit maximal mobile du système à l'aide d'une équation (2.1), comme suit :

$$P^*(t) = \left(\frac{Q^*(t)}{\bar{Q}_m(t)}\right)^{\alpha} (\bar{P}_m(t) - b_0) + b_0, \qquad (2.1)$$

où P*(t) représente le point de consigne de pression adaptative, Q*(t) est le débit du système demandé par les charges de température, $b_0$ est la pression minimale à débit nul, $\alpha$ est le paramètre de réglage de la courbe de contrôle variant comme $1 \leq \alpha \leq 2$ défini entre une courbe linéaire et une courbe quadratique, et $\bar{Q}m(t)$ et $\bar{P}m(t)$ sont le débit et la pression maximum mobile adaptative ; ou
2) un signal de débit destiné à être utilisé dans une technique de régulation PID de débit basée sur un point de consigne de débit dans une fonction de régulation utilisant une équation (2.2), comme suit :

$$Q^*(t) = \left(\frac{P^*(t)-b_0}{P_0-b_0}\right)^{-\alpha} \bar{Q}_m(t) \, , \qquad (2.2)$$

y compris lorsque le processeur de signal ou le module de traitement (10a) est configuré pour recevoir le signal de pression instantané de P*(t) d'un capteur de pression.

2. Appareil (10) selon la revendication 1, dans lequel le processeur de signal ou le module de traitement (10a) est configuré pour fournir une signalisation correspondante contenant des informations sur les vitesses de pompe souhaitées (n), y compris lorsque la signalisation correspondante contient des informations utilisées pour contrôler un système de pompage hydronique.

3. Appareil (10) selon la revendication 1, dans lequel le processeur de signal ou le module de traitement (10a) est configuré dans, ou fait partie d'un panneau de commande de pompe central, ou dans lequel les circulateurs de zone comprennent des capteurs pour fournir les débits.

4. Appareil (10) selon la revendication 1, dans lequel le processeur de signal ou le module de traitement (10a) est configuré pour recevoir une signalisation associée contenant des informations sur le débit du système de Q*(t) ou la pression de P*(t) provenant d'un débitmètre ou du capteur de pression, ou d'un convertisseur sans capteur, respectivement.

5. Appareil (10) selon la revendication 1, dans lequel, pour une application à zones multiples, le processeur de signaux ou le module de traitement (10a) est configuré pour déterminer le débit du système de $Q^*(t)$ comme une somme des débits des zones, respectivement, en utilisant une équation (2.3), comme suit:

$$Q^*(t) = \sum_{i=1}^{n} Q_i^*(t) \, , \qquad (2.3)$$

Où $Q_i^* t$ est un débit à la zone i et n est le nombre total de zones, dans lequel le processeur de signal ou le module de traitement (10a) est configuré pour recevoir la signalisation associée contenant des informations sur le débit du système de $Q_i^* t$ ou la pression de P*(t) provenant d'un débitmètre ou du capteur de pression, ou d'un convertisseur sans capteur dans la zone i, respectivement.

6. Appareil (10) selon la revendication 1, dans lequel le processeur de signal ou le module de traitement (10a) est configuré pour déterminer la signalisation associée liée au flux maximum mobile adaptatif de $\bar{Q}m$ par une moyenne mobile ou un détecteur de crête mobile sur le flux du système de Q en utilisant une équation (2.4), comme suit:

$$\bar{Q}_m(t) = \begin{cases} MA(Q(t)) \; \forall \; MP(Q(t)), & Q < \bar{Q}_m \\ Q(t), & Q \geq \bar{Q}_m \end{cases}' \qquad (2.4)$$

où la fonction MA(Q(t)) représente une moyenne mobile et la fonction MP(Q(t)) représente respectivement un détecteur de crête mobile.

7. Appareil (10) selon la revendication 6, dans lequel le processeur de signal ou le module de traitement (10a) est configuré pour déterminer une signalisation associée contenant des informations sur $\bar{P}m(t)$ en utilisant une équation de flux, comme suit:

$$\bar{P}_m = (\bar{Q}_m / \bar{C}_v)^2 \, ,$$

y compris lorsque le processeur de signal ou le module de traitement (10a) est configuré pour déterminer la signalisation associée contenant des informations sur un coefficient de caractéristiques de système adaptatif de $\bar{C}v$ en utilisant le coefficient des caractéristiques équivalentes du système de $\bar{C}v$ en utilisant en conséquence le détecteur de moyenne mobile ou maximale défini dans l'équation (2.4).

8. Appareil (10) selon la revendication 1, dans lequel les paramètres $\overline{Q}$m et $\overline{P}$m varient dans une fourchette de 0<$\overline{Q}$m<$\overline{Q}$ d et $b_0$<$\overline{P}$m<$\overline{P}$d y compris lorsque le coefficient des caractéristiques du système adaptatif de $\overline{C}$v est une valeur constante de $\overline{C}$v, si le débit du système est régulé par des circulateurs.

9. Appareil (10) selon la revendication 1, dans lequel le processeur de signal ou le module de traitement (10a) est configuré pour déterminer une signalisation associée contenant des informations sur un point de conception ou un point de fonctionnement de débit et de pression du système de $\overline{Q}$d et $\overline{P}$d, où la courbe du système peut traverser une courbe de pompe à une vitesse de conception, à l'aide des équations (2.5), comme suit:

$$\begin{cases} \overline{Q}_d(n_d, \bar{C}_v) = \frac{n_d}{2n_{max}} (-b \pm \sqrt{b^2 - 4c(a - \bar{C}_v^{-2})})/(a - \bar{C}_v^{-2}) \\ \overline{P}_d(n_d, \bar{C}_v) = \left(\frac{\overline{Q}_d}{\bar{C}_v}\right)^2 \end{cases} , \quad (2.5)$$

où a, b et c sont les coefficients d'une fonction de courbe de pompe du second ordre la mieux adaptée, $n_d$ et $n_{max}$ sont les vitesses de pompe au point de conception et un maximum associé, respectivement.

10. Appareil (10) selon la revendication 1, dans lequel le processeur de signal ou le module de traitement (10a) est configuré pour déterminer une signalisation associée contenant des informations sur une fonction PID pour une vitesse de moteur n par rapport à une pression instantanée du système et la valeur de consigne de pression adaptative (P* (t)) en utilisant une équation (3.1), comme suit:

$$n(t) = pid(P^*(t), P(t)), \quad (3.1)$$

où P*(t) est le point de consigne de pression adaptative (P*(t)) défini par l'équation (2.1), P(t) est une pression instantanée du système, et pid représente une fonction de contrôle PID.

11. Appareil (10) selon la revendication 9, dans lequel le processeur de signal ou le module de traitement (10a) est configuré pour déterminer la signalisation associée pour une régulation PID de type suiveur de débit afin d'obtenir un fonctionnement à énergie de pompage minimale en utilisant une équation (3.2), comme suit:

$$n(t) - pid(Q^*(t), Q(t)), \quad (3.2)$$

où Q*(t) est le point de consigne du débit du système déterminé à l'aide de l'équation (2.2) avec un signal de pression instantanée du système ou déterminé directement pour les signaux de débit des zones multiples à l'aide de l'équation (2.3), respectivement, Q(t) est le débit instantané du système à la vitesse du moteur n.

12. Appareil (10) selon la revendication 1, dans lequel l'appareil comprend un système et un appareil de commande de pompage sans capteur adaptatif au débit.

13. Procédé **caractérisé par**:

la réception avec un processeur de signal ou un module de traitement (10a) d'une signalisation contenant des informations sur les débits provenant de convertisseurs sans capteur dans les circulateurs de zone des zones de chauffage/refroidissement contrôlées par des capteurs de température dans un système de chauffage hydronique afin de dériver une valeur de consigne de pression adaptative (P*(t)) pour répondre aux débits demandés par les zones de chauffage/refroidissement en utilisant un système adaptatif et une équation de courbe de contrôle de débit, la signalisation reçue contenant également des informations sur les débits totaux demandés par les circulateurs de zone; et

déterminer avec le processeur de signal ou le module de traitement (10a) les vitesses de pompe souhaitées (n) pour les circulateurs de zone afin de répondre aux exigences de température dans les zones de chauffage, sur la base de la signalisation reçue;

déterminer avec le processeur de signal ou le module de traitement une équation de courbe de contrôle de pompe adaptative basée sur une courbe de système adaptative et comme un débit de système maximum mobile qui dépend d'une relation entre un point de consigne de pression adaptative, un débit de système demandé par les charges de température, une pression minimum à débit nul, un paramètre de réglage de courbe de contrôle, et un débit et une pression maximum mobile adaptative, et
déterminer avec le processeur de signal ou le module de traitement:

1) l'équation de la courbe de contrôle adaptative de la pompe basée sur la courbe du système adaptatif et comme le débit maximal mobile du système à l'aide d'une équation (2.1), comme suit:

$$P^*(t) = \left(\frac{Q^*(t)}{\bar{Q}_{m(t)}}\right)^{\alpha} (\bar{P}_m(t) - b_0) + b_0, \qquad (2.1)$$

où $P^*(t)$ représente le point de consigne de pression adaptative, $Q^*(t)$ est le débit du système demandé par les charges de température, $b_0$ est la pression minimale à débit nul, $\alpha$ est le paramètre de réglage de la courbe de contrôle variant comme $1 \leq \alpha \leq 2$ défini entre une courbe linéaire et une courbe quadratique, et $\bar{Q}m(t)$ et $\bar{P}m(t)$ sont le débit et la pression maximum mobile adaptative; ou
2) un signal de débit destiné à être utilisé dans une technique de régulation PID de débit basée sur un point de consigne de débit dans une fonction de régulation utilisant une équation (2.2), comme suit:

$$Q^*(t) = \left(\frac{P^*(t) - b_0}{P_0 - b_0}\right)^{-\alpha} \bar{Q}_m(t), \qquad (2.2)$$

y compris lorsque le processeur de signal ou le module de traitement est configuré pour recevoir le signal de pression instantané de $P^*(t)$ d'un capteur de pression.

**14.** Procédé selon la revendication 13, dans lequel le procédé comprend la fourniture, à partir du processeur de signal ou du module de traitement (10a), d'une signalisation correspondante contenant des informations sur les vitesses de pompage souhaitées, y compris lorsque la signalisation correspondante contient des informations utilisées pour commander un système hydronique de pompage.

**15.** Procédé selon la revendication 13, dans lequel le procédé comprend l'un de:
la configuration du processeur de signal ou du module de traitement du signal (10a) dans un panneau de commande de pompe central ou la formation du processeur ou du module de traitement du signal (10a) comme partie intégrante de ce panneau; ou la configuration des circulateurs de zone avec des capteurs pour fournir les débits.

EP 3 152 631 B1

Figure 1:    A conventional hydronic pumping heating system (Prior art)

Figure 2:    A system and flow adaptive pumping control scheme for a
hydronic pumping system.

Figure 3:      Schematic of an energy saving sensorless pumping control configuration

Apparatus 10

Signal processor or processing module 10a configured at least to:

     receive signaling containing information about flow rates from sensorless converters in zone circulators in heating/cooling zones controlled by temperature sensors in a hydronic heating system in order to derive an adaptive pressure set point to meet the flow rates requested by the heating/cooling zones using an adaptive system and flow control curve equation, the signaling received also containing information about total flow rates requested by the zone circulators;

     determine desired pump speeds for the zone circulators to meet temperature requirements in heat zones, based upon the signaling received; and/or

     provide corresponding signaling containing information about the desired pump speeds for the zone circulators.

Other signal processor circuits or components 10b that do not form part of the underlying invention, e.g., including input/output modules, one or more memory modules, data, address and control busing architecture, etc.

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012173027 A